# EUROPEAN PATENT APPLICATION

(11) **EP 4 588 645 A1**
(43) Date of publication of application: **23.07.2025**
(21) Application number: 23881616.9
(22) Date of filing: 08.10.2023
(51) Int. Cl.: B29C 64/386

(54) **METHOD AND APPARATUS FOR PREDICTING WAITING TIME BEFORE EXPOSURE OF 3D PRINTING, DEVICE, AND MEDIUM**

(30) Priority: 26.10.2022 CN 202211320286
(71) Applicant: Shining 3D Tech Co., Ltd., Hangzhou, Zhejiang 311258 (CN)
(72) Inventor: ZHANG, Yuanhao, Hangzhou, Zhejiang 311258 (CN); XU, Chenhui, Hangzhou, Zhejiang 311258 (CN); CAO, Lingxin, Hangzhou, Zhejiang 311258 (CN)
(74) Representative: Dehns Germany Partnerschaft mbB
(86) International application number: PCT/CN2023/123401
(87) International publication number: WO 2024/088037

(57) **Abstract**

Disclosed are a method and apparatus for predicting waiting time before exposure of Three-Dimensional (3D) printing, a device, and a medium. The method includes: acquiring a mask image of each printing cross section in a 3D printing model; determining edge angles in the mask image, and determining geometric parameters of the edge angles; inputting the geometric parameters of the edge angles into a pre-trained prediction model for processing to generate waiting time corresponding to the edge angles; and according to the waiting time corresponding to the edge angles, determining waiting time of the printing cross section corresponding to the mask image. The waiting time before exposure of each layer of printing cross section can be accurately predicted in real time.

## Description

The present disclosure claims priority to Chinese Patent Application No. 202211320286.2, filed to the China National Intellectual Property Administration on October 26, 2022 and entitled "Method and Apparatus for Predicting Waiting Time Before Exposure of 3D Printing, Device, and Medium", the disclosure of which is hereby incorporated by reference in its entirety.

### Technical Field

The present disclosure relates to the technical field of artificial intelligence, and in particular, to a method and apparatus for predicting waiting time before exposure of Three-Dimensional (3D) printing, a device, and a medium.

### Background

3D printing is rapid prototyping technology (also called additive manufacturing). In pull-up surface forming 3D printing, when a printing platform moves downward, liquid resin may be squeezed to cause a certain deformation of a Z axis and a cartridge of a printer. The resin is squeezed out in the deformation recovery process, and if a model is light-cured at this time, some resin may still flow out when being cured into a colloid and adhere to a surface of the model to cause the surface of the model to be rough. Therefore, it is necessary to wait for a period of time.

At present, empirical time is set as waiting time before exposure, and all the models and each layer use the empirical time. However, the accuracy of the manually set empirical time is low, or a drainage force is detected by a force sensor, and waiting is stopped when the drainage force is less than a threshold. This manner requires the force sensor for detection, and the force sensor cannot be used to determine a flow rate and the waiting time at a specific position.

### Summary

The technical problem to be solved by the present disclosure is to solve the problems that the accuracy of existing manually set empirical time is low and a force sensor cannot be used to determine a flow rate and waiting time at a specific position.

In order to solve the above technical problem, the present disclosure provides a method and apparatus for predicting waiting time before exposure of 3D printing, a device, and a medium.

In a first aspect, embodiments of the present disclosure provide a method for predicting waiting time before exposure of 3D printing, which includes the following operations.

A mask image of each printing cross section in a 3D printing model is acquired.

Edge angles in the mask image are determined, and geometric parameters of the edge angles are determined.

The geometric parameters of the edge angles are input into a pre-trained prediction model for processing to generate waiting time corresponding to the edge angles.

According to the waiting time corresponding to the edge angles, waiting time of the printing cross section corresponding to the mask image is determined.

In a second aspect, the embodiments of the present disclosure provide an apparatus for predicting waiting time before exposure of 3D printing, which includes: an acquisition component, a determination component, a prediction component, and a generation component.

The acquisition component is configured to acquire a mask image of each printing cross section in a 3D printing model.

The determination component is configured to determine edge angles in the mask image, and determine geometric parameters of the edge angles.

The prediction component is configured to input the geometric parameters of the edge angles into a pre-trained prediction model for processing to generate waiting time corresponding to the edge angles.

The generation component is configured to determine, according to the waiting time corresponding to the edge angles, waiting time of the printing cross section corresponding to the mask image.

In a third aspect, the embodiments of the present disclosure provide an electronic device, which includes: a processor; and a memory configured to store executable instructions of the processor. The processor is configured to read the executable instructions from the memory and execute the instructions to implement the method for predicting the waiting time before exposure of 3D printing in the first aspect.

In a fourth aspect, the embodiments of the present disclosure provide a computer-readable storage medium. The storage medium stores a computer program, and the computer program is executed by a processor to implement the method for predicting the waiting time before exposure of 3D printing in the first aspect.

Compared with the related art, the technical solutions provided by the embodiments of the present disclosure have the following advantages: by means of acquiring the mask image of each printing cross section in the 3D printing model, determining the geometric parameters of the edge angles in the mask image, and inputting the geometric parameters of the edge angles into the pre-trained prediction model for processing, the waiting time of the printing cross section corresponding to the mask image is determined. Therefore, the waiting time before exposure of each layer of printing cross section can be accurately predicted in real time, and the prediction may be achieved based on the geometric parameters of the edge angles, without the need for a force sensor to detect a drainage force, thereby improving the accuracy and efficiency of the waiting time before exposure.

It is to be understood that the above general description and the following detailed description are only exemplary and explanatory and not intended to limit the present disclosure.

### Brief Description of the Drawings

The drawings, which are incorporated in and constitute a part of this specification, illustrate embodiments consistent with the present disclosure and, together with the specification, serve to describe the principle of the present disclosure.

In order to more clearly illustrate the embodiments of the present disclosure or the technical solutions in the related art, the drawings used in the description of the embodiments or the related art will be briefly described below. It is apparent that other drawings may further be obtained by those of ordinary skill in the art according to these drawings without creative efforts.
Fig. 1 is a schematic flowchart of a method for predicting waiting time before exposure of 3D printing provided by some embodiments of the present disclosure.
Fig. 2 is a schematic diagram of geometric parameters of a concave angle provided by some embodiments of the present disclosure.
Fig. 3 is a schematic diagram of geometric parameters of another concave angle provided by some embodiments of the present disclosure.
Fig. 4 is a schematic diagram of a distance field provided by some embodiments of the present disclosure.
Fig. 5 is a schematic diagram of a prediction process provided by some embodiments of the present disclosure.
Fig. 6 is a schematic diagram of a training process of a prediction model provided by some embodiments of the present disclosure.
Fig. 7 is a schematic diagram of a concave angle mask of a real model provided by some embodiments of the present disclosure.
Fig. 8 is a schematic structural diagram of an apparatus for predicting waiting time before exposure of 3D printing provided by some embodiments of the present disclosure.

### Detailed Description of the Embodiments

In order to more clearly understand the above objectives, features and advantages of the present disclosure, the solutions of the present disclosure will be further described below. It is to be noted that embodiments in the present disclosure and features in the embodiments may be combined with each other without conflict.

In the following description, many specific details are described in order to fully understand the present disclosure, but the present disclosure may also be implemented in other ways different from those described here. It is apparent that the described embodiments are only a part rather all of the embodiments of the present disclosure.

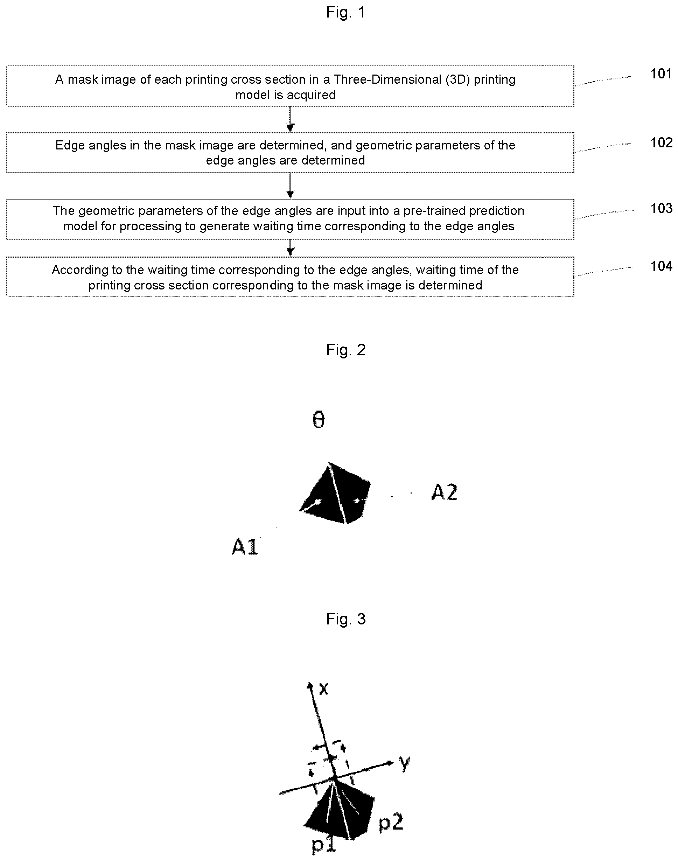

Fig. 1 is a schematic flowchart of a method for predicting waiting time before exposure of 3D printing provided by some embodiments of the present disclosure. The method provided by the embodiments of the present disclosure may be performed by an apparatus for predicting waiting time before exposure of 3D printing. The apparatus may be implemented by software and/or hardware and may be integrated on any electronic device having computing capabilities.

As shown in Fig. 1, the method for predicting the waiting time before exposure of 3D printing provided by the embodiments of the present disclosure may include the following operations.

At S101, a mask image of each printing cross section in a 3D printing model is acquired.

The method in some embodiments of the present disclosure may be applied to a light-curing printer based on surface exposure.

In some embodiments of the present disclosure, the 3D printing model to be printed is sliced to determine a plurality of layers of printing cross sections, and then the mask image of each layer of printing cross section is generated, where the mask image includes a mask of the printing cross section.

At S102, edge angles in the mask image are determined, and geometric parameters of the edge angles are determined.

In some embodiments of the present disclosure, for the mask image of a certain printing cross section, the edge angles of the mask in the mask image are detected, where the edge angle is an angle between two adjacent sides, and the edge angles include a concave angle, where the concave angle refers to an angle on the outside of the mask that is less than 180°, such as shown by θ in Fig. 2.

In some embodiments of the present disclosure, edge detection is performed on the mask image based on an edge detection algorithm, and then the edge angles are determined according to edge detection results.

In some embodiments of the present disclosure, the edge angles include two categories: the concave angle and a non-concave angle. The corresponding geometric parameters are set according to the category of the edge angle. The geometric parameters of the edge angles are configured to describe geometric information. The geometric parameters include, for example, an angle, an area, a length, etc. In some embodiments of the present disclosure, the geometric parameters of the concave angle include the angle and the area, and the geometric parameters of the non-concave angle include the angle and the length.

In some embodiments of the present disclosure, if the concave angle exists in the mask image, a first area and a second area where convection is generated at the concave angle are determined based on the mask image, then the area of the first area and the area of the second area are determined, and the angle of the concave angle, the area of the first area, and the area of the second area are used as the geometric parameters of the edge angles.

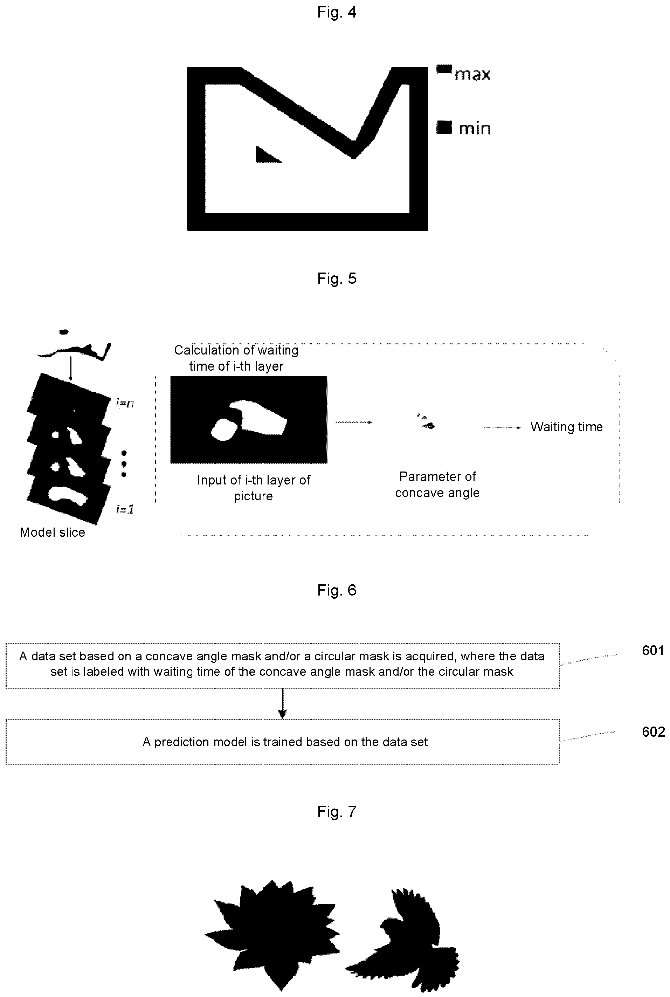

As shown in Fig. 3, any point p1 in the first area A1 and any point p2 in the second area A2 generate convection in a specified direction, and the specified direction is a y-axis direction. In some embodiments of the present disclosure, there are many implementations to determine the first area and the second area where convection is generated at the concave angle. A set of pixels closest to the concave angle may be determined in the mask image. Such pixels flow out from the concave angle in a gradient direction in the distance field. The distance field is as shown in Fig. 4. Therefore, the set of pixels is divided into the first area and the second area according to the direction, or the first area and the second area are determined from the mask image by skeleton extraction.

In some embodiments of the present disclosure, if any of all the edge angles of the mask is the concave angle, it is determined that the concave angle exits in the mask image. As shown in Fig. 2, a concave angle θ exits in the figure, and the geometric parameters [θ, A1, A2] of the concave angle are used as geometric parameters subsequently input into a prediction model. In the geometric parameters, θ represents the angle of the concave angle, and A1 and A2 are the area of the first area and the area of the second area, respectively. It is to be noted that the above description takes one concave angle in the mask image as an example. In a case of a plurality of concave angles, a plurality of sets of geometric parameters corresponding to the plurality of concave angles may be determined as the geometric parameters subsequently input into the prediction model with reference to the above description. Therefore, the waiting time of the concave angle can be accurately predicted by the geometric parameters of the concave angle.

In some embodiments of the present disclosure, if no concave angle exits in the mask image, the maximum inscribed circle radius of the mask in the mask image is determined, where a preset target angle and the maximum inscribed circle radius are used as the geometric parameters of the edge angles.

In some embodiments of the present disclosure, if all the edge angles of the mask are not the concave angles, it is determined that no concave angle exits in the mask image. For example, for a convex polygonal mask, it is determined that no concave angle exits. In the absence of the concave angle, the maximum inscribed circle radius R of the mask is determined. For [θ, A1, A2] in the above example, θ takes the preset target angle, A1 and A2 both take the maximum inscribed circle radius, and the target angle is, for example, 0, that is, when no concave angle exists in the mask image, the geometric parameters [0, R, R] are used as the geometric parameters subsequently input into the prediction model. Therefore, the prediction of the waiting time of the convex polygonal mask can be supported.

At S103, the geometric parameters of the edge angles are input into a pre-trained prediction model for processing to generate waiting time corresponding to the edge angles.

In some embodiments of the present disclosure, the prediction model is implemented based on machine learning, and a machine learning model is pre-trained. The input of the machine learning model is the geometric parameters, and the output is the predicted waiting time. As an example, the input is 3D [θ, A1, A2], and the output is one-dimensional waiting time.

In some embodiments of the present disclosure, a mask/real model with known geometric parameters is used for 3D printing, the waiting time of each mask/real model is observed and obtained, the observed waiting time is labeled to obtain a data set for model training, and then the prediction model is trained based on the data set and machine learning technology.

At S104, according to the waiting time corresponding to the edge angles, waiting time of the printing cross section corresponding to the mask image is determined.

In some embodiments of the present disclosure, for the mask image of a certain printing cross section, the waiting time corresponding to at least one edge angle is determined based on the prediction model, and then the waiting time before exposure (also called drainage waiting time) of the printing cross section is determined according to the waiting time corresponding to at least one edge angle. For example, if one concave angle exists in the mask image, the geometric parameters of the concave angle are input into the prediction model to obtain the waiting time of the concave angle, and the waiting time of the concave angle is used as the waiting time before exposure of the printing cross section. For another example, if no concave angle exists in the mask image, the target angle and the maximum inscribed circle radius are input into the prediction model, and the obtained waiting time is used as the waiting time before exposure of the printing cross section.

In some embodiments of the present disclosure , the prediction model outputs a plurality of waiting time corresponding to the edge angles, determines a maximum value among the plurality of waiting time corresponding to the plurality of edge angles, and uses the maximum value as the waiting time of the printing cross section corresponding to the mask image.

As an example, the plurality of concave angles exist in the mask image, the geometric parameters of the plurality of concave angles are respectively input into the prediction model to obtain the prediction time of the plurality of concave angles, and the maximum value of the prediction time of the plurality of concave angles is used as the waiting time of the printing cross section corresponding to the mask image. Referring to Fig. 5, the 3D printing model to be printed is sliced to obtain n layers of printing cross sections. For the i-th layer of printing cross section, the input is the mask image of the printing cross section, and the waiting time before exposure of the printing cross section is determined based on the above steps.

According to the technical solutions of the embodiments of the present disclosure, by means of acquiring the mask image of each printing cross section in the 3D printing model, determining the geometric parameters of the edge angles in the mask image, inputting the geometric parameters of the edge angles into the pre-trained prediction model for processing to generate the waiting time corresponding to the edge angles, and then determining the waiting time of the printing cross section corresponding to the mask image, the waiting time before exposure of each layer of printing cross section can be accurately predicted in real time, the accuracy is improved compared with a manner of setting empirical time, and the prediction may be achieved based on the geometric parameters of the edge angles, without the need to for a force sensor to detect a drainage force, thereby improving the accuracy and efficiency of the waiting time before exposure.

A training process of the prediction model is described below.

Fig. 6 is a schematic diagram of a training process of a prediction model provided by some embodiments of the present disclosure. As shown in Fig. 6, the training process includes the following steps.

At S601, a data set based on a concave angle mask and/or a circular mask is acquired, where the data set is labeled with waiting time of the concave angle mask and/or the circular mask.

In some embodiments of the present disclosure, a specific model is printed to obtain training data. For the data set based on the concave angle mask, concave angle masks with different angles of the concave angles and different areas of convective regions are printed, or a concave angle mask of the real model is printed. The concave angle mask of the real model is as shown in Fig. 7. For the data set based on the circular mask, disks of different radii are printed. On the light-curing printer based on surface exposure, the waiting time usually changes gradually from 0.1 s to 12 s. By observing the waiting time required for each mask, data is collated as the training data for the prediction model.

In some embodiments of the present disclosure , the prediction model is a Multilayer Perceptron (MLP).

At S602, the prediction model is trained based on the data set.

In some embodiments of the present disclosure, the data set based on the concave angle mask includes the angle of the concave angle mask, the area of the convective region, and the waiting time, and the data set based on the circular mask includes the target angle, the radius, and the waiting time. The model is trained by the MLP based on the above data sets, and the model input is 3D [θ, A1, A2], and the output is one-dimensional waiting time.

As an example, the prediction model is trained by the above dataset based on the concave angle mask and the dataset based on the circular mask. In some embodiments of the present disclosure, the prediction model is uniformly trained by the above two datasets. Then, in the prediction process, regardless of whether the concave angle exists in the mask image, the geometric parameters of the edge angles are input into the prediction model for processing to generate the waiting time corresponding to the edge angles.

As another example, a first prediction model is trained by the data set based on the concave angle mask, and a second prediction model is trained by the data set based on the circular mask. In some embodiments of the present disclosure, the prediction model is respectively trained by the above two data sets. Then, in the prediction process, if the concave angle exists in the mask image, the geometric parameters of the edge angles are input into the first prediction model for processing, and if no concave angle exists in the mask image, the geometric parameters of the edge angles are input into the second prediction model for processing. Therefore, the accuracy of prediction can be further improved.

A model training and prediction process is exemplified below.

First, based on the collected training data, the prediction model based on machine learning is trained based on the data. Then, in the 3D printing and prediction process, the 3D printing model is sliced, and the sliced mask image is processed based on the prediction model. If the concave angle exists in the mask image, the geometric parameters [θ, A1, A2] of the concave angle are input into the prediction model, and the prediction time of the concave angle is output. If a plurality of prediction time exists, the maximum value is used as the waiting time of the layer of printing cross section. If no concave angle exists in the mask image, the maximum inscribed circle radius R of the mask is determined, [θ, A1, A2] are input into the prediction model, and the corresponding prediction time is output as the waiting time of the layer of printing cross section.

According to the technical solutions of the embodiments of the present disclosure, the prediction model is trained by the data set of the concave angle mask and the data set of the circular mask, and the data required by machine learning may be met based on the geometric information such as the geometric parameters of the concave angle, so that the waiting time before exposure of the printing cross section is accurately predicted, without the need for the force sensor to detect the drainage force, thereby improving the real-time performance of prediction of the waiting time.

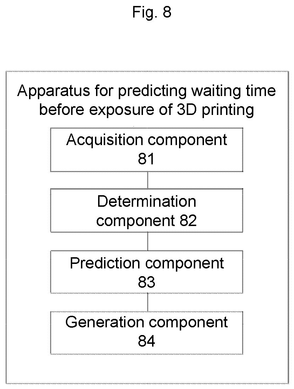

Fig. 8 is a schematic structural diagram of an apparatus for predicting waiting time before exposure of 3D printing provided by some embodiments of the present disclosure. As shown in Fig. 8, the apparatus for predicting the waiting time before exposure of 3D printing includes: an acquisition component 81, a determination component 82, a prediction component 83, and a generation component 84.

The acquisition component 81 is configured to acquire a mask image of each printing cross section in a 3D printing model.

The determination component 82 is configured to determine edge angles in the mask image, and determine geometric parameters of the edge angles.

The prediction component 83 is configured to input the geometric parameters of the edge angles into a pre-trained prediction model for processing to generate waiting time corresponding to the edge angles.

The generation component 84 is configured to determine, according to the waiting time corresponding to the edge angles, waiting time of the printing cross section corresponding to the mask image.

In some embodiments of the present disclosure, the determination component 82 is specifically configured to determine, if a concave angle exists in the mask image, a first area and a second area where convection is generated at the concave angle based on the mask image, where any point in the first area and any point in the second area generate convection in a specified direction; and determine the area of the first area and the area of the second area, where an angle of the concave angle, the area of the first area, and the area of the second area are used as the geometric parameters of the edge angles.

In some embodiments of the present disclosure, the determination component 82 is specifically configured to determine, if no concave angle exits in the mask image, the maximum inscribed circle radius of a mask in the mask image, where a preset target angle and the maximum inscribed circle radius are used as the geometric parameters of the edge angles.

In some embodiments of the present disclosure, the prediction model is an MLP. The apparatus further includes: a training component, configured to acquire a data set based on a concave angle mask and/or a circular mask, where the data set is labeled with waiting time of the concave angle mask and/or the circular mask; and train the prediction component based on the data set.

In some embodiments of the present disclosure, the training component is specifically configured to train a first prediction model by the data set based on the concave angle mask, and train a second prediction model by the data set based on the circular mask.

The prediction model 83 is specifically configured to input, if the concave angle exists in the mask image, the geometric parameters of the edge angles into the first prediction model for processing; and input, if no concave angle exists in the mask image, the geometric parameters of the edge angles into the second prediction model for processing.

In some embodiments of the present disclosure, a plurality of edge angles are provided, and the generation component 84 is specifically configured to determine a maximum value among a plurality of waiting time corresponding to the plurality of edge angles, where the maximum value is used as the waiting time of the printing cross section corresponding to the mask image.

The apparatus for predicting the waiting time before exposure of 3D printing provided by the embodiments of the present disclosure may perform any method for predicting the waiting time before exposure of 3D printing provided by the embodiments of the present disclosure, and has the corresponding functional components and beneficial effects for performing the method. The content not described in detail in the embodiments of the present disclosure may refer to the description in any method embodiment of the present disclosure.

The embodiments of the present disclosure further provide an electronic device. The electronic device includes one or more processors and a memory. The processor may be a Central Processing Unit (CPU) or other forms of processing units having data processing capabilities and/or instruction execution capabilities, and may control other components in the electronic device to perform desired functions. The memory may include one or more computer program products, and the computer program product may include various forms of computer-readable storage media, such as a volatile memory and/or a non-volatile memory. The volatile memory may include, for example, a Random Access Memory (RAM) and/or a cache, etc. The non-volatile memory may include, for example, a Read-Only Memory (ROM), a hard disk, a flash, etc. One or more computer program instructions may be stored on the computer-readable storage medium, and the processor may run the program instructions to implement the method of the embodiments of the present disclosure and/or other desired functions. Various contents such as an input signal, a signal component, a noise component, etc. may also be stored in the computer-readable storage medium.

In some embodiments of the present disclosure, the electronic device may further include: an input apparatus and an output apparatus, and these components are interconnected through a bus system and/or other forms of connection mechanisms. In addition, the input apparatus may further include, for example, a keyboard, a mouse, etc. The output apparatus may output various information to the outside, including determined distance information, direction information, etc. The output apparatus may include, for example, a display, a speaker, a printer, and a communication network and a remote output device connected thereto, etc. In addition, according to the specific application, the electronic device may further include any other appropriate components such as a bus, an input/output interface, etc.

In addition to the above method and apparatus, the embodiments of the present disclosure may also be a computer program product, which includes computer program instructions. When the computer program instructions are executed by a processor, the processor performs any method provided by the embodiments of the present disclosure.

The computer program product may write a program code for executing the operations of the embodiments of the present disclosure in any combination of one or more programming languages, including object-oriented programming languages such as Java, C++, etc., and conventional procedural programming languages such as "C" language or similar programming languages. The program code may be executed completely on a user computing device, partially on a user device, as a separate software package, partially on a user computing device, partially on a remote computing device, or completely on a remote computing device or server.

In addition, the embodiments of the present disclosure may also be a computer-readable storage medium on which computer program instructions are stored. When the computer program instructions are executed by the processor, the processor performs any method provided by the embodiments of the present disclosure.

The computer-readable storage medium may adopt any combination of one or more readable mediums. The readable medium may be a readable signal medium or a readable storage medium. The readable storage medium may include, but is not limited to, for example, an electrical, magnetic, optical, electromagnetic, infrared, or semiconductor system, device, or apparatus, or any combination thereof. More specific examples (a non-exhaustive list) of the readable storage medium may include an electrical connector with one or more wires, a portable disk, a hard disk, an RAM, an ROM, an Erasable Programmable ROM (EPROM or a flash), an optical fiber, a Compact Disc ROM (CD-ROM), an optical storage device, a magnetic storage device, or any proper combination thereof.

It is to be noted that relational terms "first", "second" and the like herein are adopted only to distinguish one entity or operation from another entity or operation and not always to require or imply existence of any such practical relationship or sequence between the entities or operations. Furthermore, terms "include" and "contain" or any other variant thereof is intended to cover nonexclusive inclusions herein, so that a process, method, object or device including a series of elements not only includes those elements but also includes other elements which are not clearly listed or further includes elements intrinsic to the process, the method, the object or the device. Under the condition of no more limitations, an element defined by the statement "including a/an......" does not exclude existence of the same other elements in a process, method, object or device including the element.

The above is only the specific implementation of the present disclosure, which causes those skilled in the art to understand or implement the present disclosure. Various modifications to these embodiments will be apparent to those skilled in the art, and the general principles defined herein may be implemented in other embodiments without departing from the spirit or scope of the present disclosure. Therefore, the present disclosure will not be limited to the embodiments shown herein, but is within the widest scope consistent with the principles and novel features disclosed herein.

### Industrial Applicability

According to a method for predicting waiting time before exposure in 3D printing provided by the present disclosure, waiting time before exposure of each layer of printing cross section can be accurately predicted in real time, and the prediction may be achieved based on geometric parameters of edge angles, without the need for a force sensor to detect a drainage force, thereby improving the accuracy and efficiency of the waiting time before exposure, and the method has strong industrial practicability.

## Claims

1. A method for predicting waiting time before exposure of Three-Dimensional, 3D, printing, comprising:
acquiring a mask image of each printing cross section in a 3D printing model;
determining edge angles in the mask image, and determining geometric parameters of the edge angles;
inputting the geometric parameters of the edge angles into a pre-trained prediction model for processing to generate waiting time corresponding to the edge angles; and
according to the waiting time corresponding to the edge angles, determining waiting time of the printing cross section corresponding to the mask image.

2. The method as claimed in claim 1, wherein the determining geometric parameters of the edge angles comprises:
in response to that a concave angle exists in the mask image, determining a first area and a second area where convection is generated at the concave angle based on the mask image, wherein any point in the first area and any point in the second area generate convection in a specified direction; and
determining an area of the first area and an area of the second area, wherein an angle of the concave angle, the area of the first area, and the area of the second area are used as the geometric parameters of the edge angles.

3. The method as claimed in claim 1 or 2, wherein the determining geometric parameters of the edge angles comprises:
in response to that no concave angle exits in the mask image, determining a maximum inscribed circle radius of a mask in the mask image, wherein a preset target angle and the maximum inscribed circle radius are used as the geometric parameters of the edge angles.

4. The method as claimed in any one of claims 1 to 3, wherein the prediction model is a Multilayer Perceptron, MLP, and the method further comprises:
acquiring a data set based on a concave angle mask and/or a circular mask, wherein the data set is labeled with waiting time of the concave angle mask and/or the circular mask; and
training the prediction model based on the data set.

5. The method as claimed in claim 4, wherein the training the prediction model based on the data set comprises:
training a first prediction model by the data set based on the concave angle mask, and training a second prediction model by the data set based on the circular mask;
the inputting the geometric parameters of the edge angles into the pre-trained prediction model for processing comprises:
in response to that a concave angle exists in the mask image, inputting the geometric parameters of the edge angles into the first prediction model for processing; and
in response to that no concave angle exists in the mask image, inputting the geometric parameters of the edge angles into the second prediction model for processing.

6. The method as claimed in any one of claims 1 to 5, wherein a plurality of edge angles are provided, and the according to the waiting time corresponding to the edge angles, determining waiting time of the printing cross section corresponding to the mask image comprises:
determining a maximum value among a plurality of waiting time corresponding to a plurality of edge angles, wherein the maximum value is used as the waiting time of the printing cross section corresponding to the mask image.

7. An apparatus for predicting waiting time before exposure of Three-Dimensional, 3D, printing, comprising:
an acquisition component, configured to acquire a mask image of each printing cross section in a 3D printing model;
a determination component, configured to determine edge angles in the mask image, and determine geometric parameters of the edge angles;
a prediction component, configured to input the geometric parameters of the edge angles into a pre-trained prediction model for processing to generate waiting time corresponding to the edge angles; and
a generation component, configured to determine, according to the waiting time corresponding to the edge angles, waiting time of the printing cross section corresponding to the mask image.

8. The apparatus as claimed in claim 7, wherein the determination component is configured to:
determine, in response to that a concave angle exists in the mask image, a first area and a second area where convection is generated at the concave angle based on the mask image, wherein any point in the first area and any point in the second area generate convection in a specified direction; and
determine an area of the first area and an area of the second area, wherein an angle of the concave angle, the area of the first area, and the area of the second area are used as the geometric parameters of the edge angles.

9. An electronic device, comprising:
a processor; and
a memory configured to store executable instructions of the processor;
the processor is configured to read the executable instructions from the memory and execute instructions to implement the method for predicting the waiting time before exposure of Three-Dimensional, 3D, printing as claimed in any one of claims 1 to 6.

10. A computer-readable storage medium, wherein the storage medium stores a computer program, and the computer program is executed by a processor to implement the method for predicting the waiting time before exposure of Three-Dimensional, 3D, printing as claimed in any one of claims 1 to 6.
